# EUROPEAN PATENT APPLICATION

(11) **EP 2 278 513 A1**
(43) Date of publication of application: **26.01.2011**
(21) Application number: 09165496.2
(22) Date of filing: 15.07.2009
(51) Int. Cl.: G06F 21/00

(54) **Method for preventing the use of a cloned user unit communicating with a server**

(71) Applicant: Nagravision SA, 1033 Cheseaux-sur-Lausanne (CH)
(72) Inventor: Baroffio, Ivan, 1020 Renens (CH)
(74) Representative: Wenger, Joel-Théophile

(57) **Abstract**

A method to prevent, detect and fight against cloning attacks by using payload keys to encrypt request and response messages exchanged between user units and server. The payload key in use is locally stored on both user unit and server. The user unit provides its locally stored payload key to the server, through a secured transmission, together with a request instruction encrypted with the payload key. Each time the server receives a request from a user unit the payload key is used for decrypting the request. The server then generates a derivation key used to compute a new payload key by the user unit. The derivation key is also securely sent back to the user unit, so that only the user unit owning the initial payload key which has encrypted the request instruction is able to compute the new payload key. The new payload key is stored on both the server and the user unit and used for the next exchanges. Doing this way, the payload key is modified during each request and response, allowing the server to check in the next incoming request from the same user unit if the payload key is the expected one. The server stores also a fallback payload key, which is the last payload key used by the user unit. By comparing the payload key provided by a user unit with the expected key or with the fallback key, the server can, by applying business rules, distinguish correct behaviors of authentic user units from unexpected system failures and from true cloning attacks.

## Description

### Field

The present invention relates to a method for preventing unauthorized user multimedia units to share access rights to a content distributed by a server via a communication network. In particular, when an unauthorized or a cloned unit is detected, countermeasures are foreseen to be activated in order to disable the access to the server.

### Technical background

Since the recent technical improvements in the field of broadband high data throughput networks and in the data processing devices, numerous solutions have been developed for fighting against fraudulent attempts to access to payload content data made available by servers in the network.

The content is exploited by user units or multimedia units defined herein as desktop or portable personal computers, digital television decoders, television sets, wireless terminals such as portable phones, etc. A specific client application such as, for example, a multimedia content player is installed in the user unit for listening or viewing audio/video content distributed by a server on the network. Conditional access and descrambling software and/or hardware modules complete the application for ensuring secure data processing within the unit.

The solutions adopted for preventing unauthorized access to payload content data on a network, are mainly based on a mutual authentication of the user unit with the content distribution server.

Document US20070283162A1 discloses a system and a method for detecting an unauthorized playback device. In a management server, a reception processing unit acquires a user terminal identifier and a first random number from a user terminal targeted for unauthorized playback device detection. The reception processing unit determines whether a second management server random number, which is stored in a storage unit in correspondence with the user terminal identifier, matches the first user terminal random number. If the two random numbers fail to match, a message indicating that a clone exists is displayed. If the two random numbers match, a terminal information generation unit of the management server generates a new random number, and writes this new random number as a second random number into the storage unit. The management server sends the second random number to the user terminal which updates the first user terminal random number to the second random number.

Document WO2006055545A2 discloses a system and method for providing secure communications between client communication devices and servers. A server generates a random offset, alters a server communication device dynamic credential by applying the random offset and stores the dynamic credential thus modified. The server sends, via a network, to a client communication device a signal including the random offset. The client communication device returns to the server a signal including a dynamic credential for verification by determining a difference between the server dynamic credential and the received dynamic credential. A presence of a cloned client communications device is detected on the basis of the difference.

Document WO2007096735A2 relates to mobile phones comprising each a personal token or SIM card used for authentication in a mobile telephony telecommunication network. The SIM card comprises a microprocessor, a memory, a stored secret key and a set of instructions for controlling the microprocessor into performing an authentication calculation on the basis of a received random number and on the basis of the stored secret key. The SIM card further includes a memory location dedicated for storing a counter value and instructions for making the counter value evolve each time the authentication calculation is performed. The counter value stored in the SIM card is compared with the counter value as received from a remote server performing the same authentication calculation as the SIM card. In case of mismatch between the two counter values, the SIM card is disabled and thus no more able to connect the mobile phone to the telecommunication network.

In case of interferences in the data transmission through the network between the server and the user units, or other data corruption coming from calculation errors at large data volume and high throughput, the above methods of mutual authentication or of detection of cloned devices may lack of efficiency. In fact, incorrect response to connection requests sent to the server or failures in encryption / decryption operations as well at user unit as at server side may result to unexpected rejection of genuine user units from the network.

### Summary of the invention

The present invention aims as well to prevent using of unauthorized or cloned devices to connect to content servers as to improve security performance and efficiency during broadband high volume data transmission by permanently checking authenticity of the user units. Even interferences or transmission errors occur; an authentic user unit is not necessarily rejected thanks to the use of a fallback procedure letting the server to adapt itself to this abnormal situation.

The aims are achieved by a method for preventing the use of a cloned user unit communicating with a server, said method comprising an initialization phase, a phase of sending at least a request to said server and a phase of receiving at least a response from the server, the initialization phase comprising the steps of :
a) defining in the server a record identified by a unique identifier (UA) of a user unit comprising at least an expected payload key and a fallback key, and setting the record in passive mode;
b) generating a first payload key by a user unit;
c) storing the first payload key locally into a memory of the user unit;
the phase of sending a request to the server and of receiving at least a response from the server comprising the steps of :
d) preparing in the user unit, a request to be sent to the server, said request containing at least a unique identifier of the user unit and an instruction, said instruction being encrypted by the first payload key,
e) securely sending the first payload key and the request to the server,
f) decrypting the instruction by the server by using the payload key provided by the user unit and identifying a record based on the unique identifier;
g) determining by the server if the identified record is in active mode and in this case, comparing the payload key with the expected payload key or the fallback key; if the comparison is negative, using a countermeasure against the user unit and terminating the process,
h) determining by the server if the identified record is in passive mode; in the positive event, defining said record as active, storing the payload key into a memory of the server as fallback payload key and continuing the method from step k;
i) determining by the server if the identified record is in active mode and in this case comparing the payload key with the expected payload key; if the comparison is successful, moving the expected payload key to the fallback key and continuing the method from step k;
j) determining by the server if the identified record is in active mode and in this case comparing the payload key with the fallback key; if the comparison is successful, continuing the method from step k;
k) generating in the server a response key (Kr);
I) preparing in the server, a response to the request to be sent to the user unit, the response comprising at least response data and the response key,
m) storing in the memory of the server, a new payload key as expected payload key, the new payload key depending at least on the response key,
n) encrypting the response data by the new payload key and sending the response including the response key to the user unit;
o) in the user unit, defining and storing a new payload key depending at least on said response key and using said new payload key as payload key for the next request to the server.

The payload keys in use are locally stored on both user unit and server. The user unit sends its locally stored payload key to the server in a secure way i.e. for example, encrypted by a transmission key known by the server and the user unit, together with the request instruction encrypted with that payload key and the unique identifier of the user unit.

Each time the server receives a request from a user unit; it will retrieve the payload key by decryption with the transmission key and use the obtained payload key to decrypt the request instruction. The server then generates according to an embodiment a derivation key as response key which will be used by the user unit to compute a new payload key.

The derivation key may also be returned in a secure way i.e. encrypted with the transmission key, to the user unit, so that only the user unit owning the initial payload key used to encrypt the request instruction previously sent is able to compute the new payload key. The latter is then stored on both the server and the user unit and will be used for the next exchanges.

Doing this way, the payload key is modified preferably during each user unit / server exchanges, which allows the server to check in the next incoming request from the same user unit if the payload key is the expected one. The server also stores a fallback payload key, which is the last one used by the user unit. By comparing the payload key provided by a user unit with the expected payload key or with the fallback key, the server can, by applying predefined business rules, distinguish correct behaviors or authorized user units from unexpected system failures (network, storage, interferences, application software crash, etc.) and from true cloning attacks which never provide either the expected key or the fallback key.

Several kinds of countermeasures may be applied when a cloned user unit has been detected such as blocking access to the server or disabling the application, services or resources used on the user unit to view content provided by the server.

An advantage of the method is that only one request from the user unit to the server followed by a response from said server to the user unit is necessary to detect a cloned user unit.

### Brief description of the figures

The invention will be better understood with the following detailed description, which refers to the attached figure given as a non-limitative example.

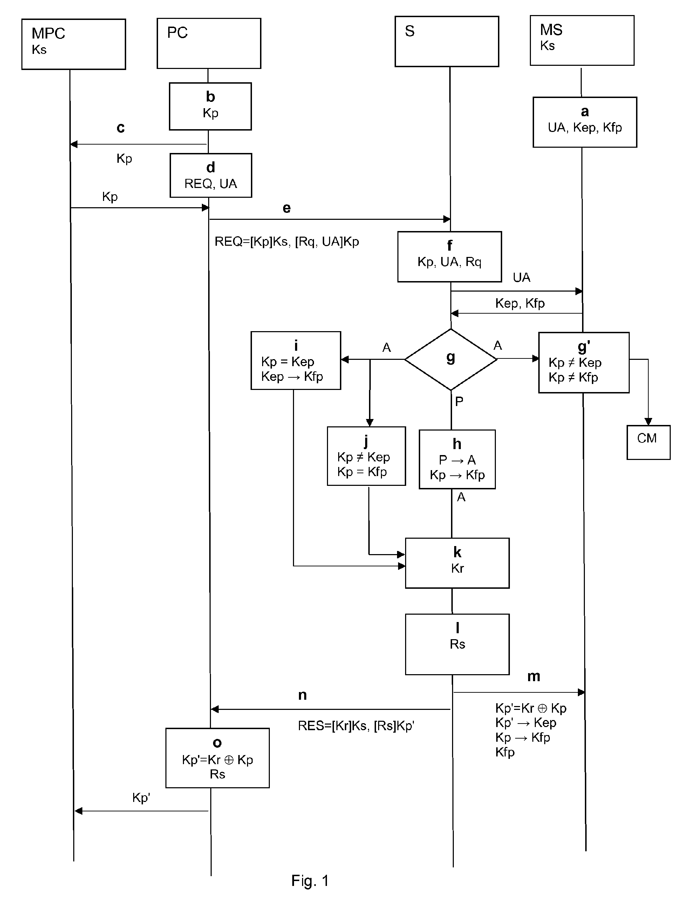

Figure 1 shows a block diagram including the different steps carried out for preventing a cloned user unit from accessing to content on a remote server. A request comprising a payload key is sent by the user unit to the server which returns a response and a response key used by the user unit to calculate a new payload key on the basis of the payload key used in the request. Several tests made by the server determine if the user unit is authorized or not.

### Detailed description of the invention

The user units PC such as desktop or portable personal computers, digital television decoders, television sets, wireless terminals such as portable phones, etc are connected to a server S via a bidirectional wired or wireless communication network. Each of the user units PC and the server S are provided with a memory (MPC, MS) for storing keys, identifiers and other processing parameters. The block diagram of figure 1 illustrates the different steps a) to o) of the method according to the invention with data stored by the user unit and the server in their respective memory and data exchanged between them in form of a request and a corresponding response.

During an initialization phase, a record is defined (step a) for each user unit liable to connect and access to the server for exploiting content or services. The record comprises a unique identifier UA of a user unit PC such as a serial number, a MAC ((Media Access Control address) address or any identifier defining in a unique and reliable way a user unit on a network. For example a mobile phone is identified on the network with a device identifier IMEI (International Mobile Equipment Identity) and a SIM card identifier IMSI (International Mobile Subscriber Identity) for identifying the user. The record further comprise an expected payload key Kep and a fallback key Kfp. At initialization the record is defined as passive, this mode being defined by various ways such as defining a default value known by the server for the expected payload and the fallback keys (Kep, Kfp) or by a simple flag indicating this passive mode. The passive mode is defined as a mode where the record has not yet been activated by a user unit PC for accessing to the server S.

The records may be established by enrolment of users interested to benefit from the services proposed by the server. At this stage the user unit identifier UA and other particulars of the user are recorded as well as default values are set for the keys in the memory of the server.

The initialization phase is completed by the definition of a transmission key Ks which may be global for all or a group of user units PC accessing to the server S or individual for each user unit. A global transmission key is preferably defined by the server which sends it to a user unit when the enrolment of a user is terminated. An individual transmission key is defined either by the server or the user unit and sent to the user unit respectively to the server at user enrolment and stored in the record together with the corresponding user unit unique identifier UA.

The user unit PC is initialized at step b and c by generating and storing in the memory MPC a first payload key Kp. This key may be obtained either by a random generator or by calculation using mathematical functions on predefined values or taken from a preprogrammed list.

In order to be authenticated by a server S or recognized as a genuine user unit PC unique on the network, the user unit PC sends a request REQ to the server S which will return a response RES and authorize access when all verification operations have been successful.

The request REQ comprises at least an instruction Rq and the unique identifier UA of the user unit PC allowing the server S to find the corresponding record for said user unit identified by the unique address UA. The instruction Rq and the unique address UA are preferably encrypted with the payload key Kp previously generated by the user unit PC and accompanied by the payload key Kp. For a secure transmission to the server, the payload key Kp is encrypted for example by the transmission key Ks known by the server S and the user unit PC. This transmission key Ks may be either of symmetrical or asymmetrical type. In the latter case, each user unit PC stores its private key and a public key of the server S while the server stores its private key and the public keys corresponding to each user unit listed in the records by the unique identifier UA. Only the public keys are then used for transmitting requests and responses. Symmetric keys, can be unique for a given user unit or global, for all or a group of the user units.

The request REQ = [Rq, UA]Kp, [Kp],)Ks thus obtained is sent to the server S, (step e) which decrypts the payload key Kp with the transmission key Ks. The payload key Kp is then used to decrypt the instruction Rq and the unique identifier UA allowing retrieving the expected payload key Kep in the record of the server S (step f).

According to an embodiment, the request REQ forms a set comprising the instruction Rq encrypted with the payload key Kp previously generated by the user unit PC, the payload key Kp and the unique address UA, this set being encrypted by the transmission key Ks. The request REQ = ([Rq]Kp, Kp, UA)Ks thus obtained is sent to the server S, which decrypts the request REQ with the transmission key Ks for obtaining first the unique identifier UA allowing retrieving the expected payload key Kep in the record of the server S. The payload key Kp is then used to decrypt the instruction Rq.

According to a further embodiment, the unique identifier may be transmitted in clear beside the set formed by the instruction Rq encrypted with the payload key Kp and the payload key Kp, the set being encrypted by the transmission key Ks. The request REQ is then represented by REQ=([Rq]Kp, Kp)Ks, UA. This embodiment allows an immediate identification of the user unit PC without any preliminary decryption operation.

It has to be noted that other embodiments for the request REQ format may be implemented such as REQ=[Rq]Ks, [Kp]Ks, UA or REQ=[Rq]Kp, [Kp]Ks, [UA]Ks.

The received payload key (Kp) is then compared with the expected payload key Kep and fallback key Kfp of this specific record. Depending on the result of the comparison (step g) the user unit PC will be accepted as an authentic one or rejected as cloned.

At step g one of the four situations as below may arise:

### 1), Cloned user unit.

In such a case, the mode of the specific record for said user unit is active A, i.e. one or several requests have already been made by the same user unit previously and payload keys corresponding to the user unit identifier UA have been stored in the record of the server S as expected and fallback keys (Kep, Kfp). The record mode has a flag set to "active" or the stored expected payload key Kep and fallback key Kfp have thus a value different from the default value set at the initialization phase.

The comparisons (step g') between the payload key Kp received from the user unit PC with the expected payload key Kep respectively the fallback payload key Kfp gives a negative result, i. e. the values of the payload key Kp does not match with the values of the expected and fallback keys (Kep, Kfp). In this case, the user unit PC is considered by the server as a cloned unit and therefore rejected.

Countermeasures CM applied in the server and / or on the user unit block access to the server or disable the application, services or resources in the user unit impeding viewing content provided by the server for example. According to an embodiment, the transmission of a response RES from the server S to the user unit PC is disabled, and the process stops at step g'.

### 2), First access to the server

The unique identifier UA retrieved from the request REQ identifies the record in the memory MS of the server as in passive mode P i.e. the user units accesses the server for the first time. The flag of the record containing the user unit unique identifier UA in is either set to passive mode or the expected and fallback payload key (Kep, Kfp) are set to default value. In this case, the passive mode P is set to active mode A (step h) and the payload key Kp received from the user unit PC is stored in the memory of the server S as the fallback payload key Kfp which value passes thus from the default value to the value of the payload key Kp. A response RES to the request REQ of the user unit is then prepared by the server S for sending to said user unit, (steps k and I). The user unit is considered as authentic by the server.

### 3), Standard further access to the server

The unique identifier UA retrieved from the request REQ identifies the record in the memory MS of the server as in active mode A. The comparison between the payload key Kp received from the user unit PC and the expected payload key Kep is successful, i.e. their values match. In this case, the expected payload key Kep moves to the fallback key Kfp i.e. the value of the fallback key Kfp change to the value of the expected payload key Kep (step i). A response RES to the request REQ of the user unit is then prepared by the server S for sending to said user unit, (steps k and I). The user unit is considered as authentic by the server.

### 4), Fallback further access to the server

The unique identifier UA retrieved from the request REQ identifies the record in the memory MS of the server as in active mode A. The comparison between the payload key Kp received from the user unit PC and the expected payload key Kep fails, but the comparison between the payload key Kp and the fallback key Kfp is successful, (step j). In this case, a response RES to the request REQ of the user unit is prepared by the server S for sending to said user unit, (steps k and I). The user unit is considered as authentic by the server. According to an embodiment, each time the payload key Kp is equal to the fallback key Kfp, a warning is raised. For example, the warning may be included in the response RES to the user unit and a specific message displayed on said user unit. The server S may also count and store the counter value of such warnings together with the user unit identifier UA for system functioning statistics and history purposes. If the number of warnings exceeds a predefined limit during a predefined period, the server may apply countermeasures in a similar way than when a cloned user unit has been detected.

Once the test passed by the payload key Kp at step g, the server S generates at step k, a response value or response key Kr such as a random number, a key derived from the payload key Kp or derivation key which may be combined with the payload key Kp to obtain a new payload key Kp'.

A response RES to the request REQ comprises at least the response key Kr prepared at step I, and sent to the user unit PC at step n. By analogy with the request REQ in the preferred embodiment, the response RES=[Kr]Ks, [Rs]Kp' comprises the response key Kr encrypted with the transmission key Ks and response data Rs encrypted with a new payload key Kp'. According to an embodiment, the new payload key Kp' may be calculated by applying a mathematical function symbolized by ⊕ on the payload key Kp. The new payload key Kp' = Kp ⊕ Kr is stored as well in the memory MPC of the user unit PC (step o) as in the memory MS of the server S where it will replace the expected payload key Kep previously used and the fallback key Kfp value is set to the value of the payload key Kp (step m).

At next request to access to the server, the new payload key Kp'will be used and the user unit PC authenticated according to steps a) to o).

According to the embodiment with the request formatted as REQ=([Rq]Kp, Kp, UA)Ks, the response RES may also be structured in a similar way such as RES=([Rs]Kp', Kr)Ks.

After decryption by the user unit PC, the response key Kr is used to define a new payload key Kp' on the basis of the previous payload key Kp, (step m). The response data Rs may comprise rules, parameters, or instructions for the user unit depending on application.

At each request REQ followed by a response RES authorizing access to the server S, the payload key Kp is changed and the previous payload key is kept in the memory MS of the server S as reserve (fallback) key Kfp to be retrieved in case of corruption of the payload key Kp currently used. If a new payload key Kp' cannot be obtained in case of interferences in the server response, the previous payload key Kp can still be used as fallback key Kfp and the next generated payload key will be used for a standard access to the server. Optionally the previous payload key Kp may also be stored in the memory of the user unit.

In the aim to prevent an access to the server S by two user units with the same unique identifier UA, one sending a payload key Kp1 corresponding to the expected payload key Kep and the other one sending a payload key Kp2 corresponding to the fallback key Kfp, the fallback key Kfp associated to the unique identifier UA may be deactivated after a successful comparison between the payload key Kp1 and the expected payload key Kep. After sending the response RES to the user unit, the server S stores a new payload key Kp1' and reactivates the fallback key Kfp by setting its value to the one of the used payload key Kp1.

According to an embodiment, at reception of a response RES from the server S, the user unit PC retrieves the response key Kr by decryption with the transmission key Ks, determines the new payload key Kp' by, for example, combination of the response key Kr and the previous payload key Kp. The obtained payload key Kp' is then used to decrypt the response RES which has been encrypted by the server S before sending. The new payload key Kp' is then stored in the memory MPC of the user PC unit and replaces the previous payload key Kp in a subsequent request.

In a further embodiment the response key Kr corresponds to the new payload key Kp' so that no further calculations are carried out by the user unit PC for determining the new payload key Kp'. As in the first embodiment, the new payload key Kp' and the response RES are preferably encrypted by the transmission key Ks.

In a further embodiment an acknowledgement message is sent from the user unit PC to the server S when the user unit PC receives a response from the server S.

According to a further embodiment at least one of the request (REQ) sent from the user unit (PC) to the server (S), the response (RES) sent from the server (S) to the user unit (PC), the payload key (Kp), the response key (Kr) or the derivation key are signed. The signature, preferably encrypted by the transmission key Ks, is made up of a digest obtained for example by a one way collision free function of hash type applied over the data to verify: request, response, the payload key, the response key or derivation key. After decryption, the received digest is compared with a locally generated digest and when the comparison is successful the process continues. Otherwise, the process may either be repeated from the beginning or stopped by the server which sends suitable error messages to the user unit.

According to a further embodiment, the secure transmission of the request REQ may be improved by transmitting a digest of the payload key Kp instead of the payload key Kp itself. In this case, the record in the memory MS of the server S may further include a corresponding digest calculated on each of the expected payload key Kep and fallback key Kfp for each unit identified by the unique identifier UA. As in preceding embodiment, the digests are preferably obtained by applying a hash type function on the keys. In this way, the payload key Kp is not exposed and thus not recoverable by capturing the request and subsequent decryption by the transmission key Ks obtained by other means. At reception of a digest, the server compares the received digest of the payload key Kp with the stored digests of the expected payload key Kep and the fallback key Kfp.

The method of the invention can be implemented in numerous applications requiring an authentication of a user unit with a remote server before accessing to services provided by the server.

For example, in broadband television application via wired or wireless bidirectional network, the request sent by the user unit (set top box, personal computer, mobile phone, etc.) to the server (head end, managing center, internet television services provider, etc.) comprises beside the payload key and instructions, several parameters related to the television application. These parameters comprise user particulars, access rights to television programs, channels or services linked with a subscription acquired by the user, rights and application software update requests, etc. The response returned by the server includes response data Rs comprising the application specific requested parameters such as rights acknowledgements or updates, application software updates etc.

In an embodiment of implementation, the authentication and clone detection procedure may be set as preamble in a more complex user login procedure requiring additional data exchanges between user unit and server. The login procedure will therefore be launched only after the user unit has been recognized by the server as an authentic user unit.

## Claims

**1.** Method for preventing the use of a cloned user unit (PC) communicating with a server (S), said method comprising an initialization phase, a phase of sending at least a request to said server and a phase of receiving at least a response from the server, the initialization phase comprising the following steps :
a) defining in the server (S) a record identified by a unique identifier (UA) of a user unit (PC) comprising at least an expected payload key (Kep) and a fallback key (Kfp), and setting the record in passive mode (P);
b) generating a first payload key (Kp) by a user unit (PC);
c) storing the first payload key (Kp) into a memory (MPC) of the user unit (PC); the phase of sending a request to the server and of receiving at least a response from the server comprising the steps of :
d) preparing in the user unit, a request (REQ) to be sent to the server, said request containing at least a unique identifier (UA) of the user unit and an instruction (Rq), said instruction (Rq) being encrypted by the first payload key (Kp);
e) securely sending the first payload key (Kp) and the request (REQ) to the server (S);
f) decrypting the instruction (Rq) by the server (S) by using the payload key (Kp) provided by the user unit (PC) and identifying a record based on the unique identifier (UA);
g) determining by the server (S) if the identified record is in active mode (A) and in this case comparing the payload key (Kp) with the expected payload key (Kep) or the fallback key (Kfp); if the comparison is negative, using countermeasure (CM) and terminating the process;
h) determining by the server (S) if the identified record is in passive mode (P); in the positive event, defining said record as active (A), storing the payload key (Kp) into a memory (MS) of the server (S) as fallback payload key (Kfp) and continuing the method from step k;
i) determining by the server (S) if the identified record is in active mode (A) and in this case comparing the payload key (Kp) with the expected payload key (Kep); if the comparison is successful, moving the expected payload key (Kep) to the fallback key (Kfp) and continuing the method from step k;
j) determining by the server (S) if the identified record is in active mode (A) and in this case comparing the payload key (Kp) with the fallback key (Kfp); if the comparison is successful, continuing the method from step k;
k) generating in the server (S) a response key (Kr);
l) preparing in the server (S), a response (RES) to the request (REQ) to be sent to the user unit (PC), the response (RES) comprising at least response data (Rs) and the response key (Kr),
m) storing in the memory (MS) of the server (S), a new payload key (Kp') as expected payload key (Kep), the new payload key (Kp') depending at least on the response key (Kr),
n) encrypting the response data (Rs) by the new payload key (Kp') and sending the response (RES) including the response key (Kr) to the user unit (PC);
o) in the user unit (PC), defining and storing a new payload key (Kp') depending at least on said response key (Kr) and using said new payload key (Kp') as payload key for the next request to the server (S).

**2.** Method according to claim 1 **characterized in that**, when the user unit (PC) receives a response (RES) from the server (S), it further comprises the steps of:
- retrieving the response key (Kr) from the server response (RES)
- determining the new payload key (Kp');
- decrypting the encrypted response data (Rs) sent by the server (S) with said new payload key (Kp');
- storing the new payload key (Kp') in the memory (MPC) of the user unit (PC) by replacing the former payload key (Kp).

**3.** Method according to claim 1, **characterized in that** the request (REQ), the corresponding response (RES), the payload key (Kp) and the response key (Kr) from the server (S) are encrypted by a transmission key (Ks) known by the user unit (PC) and the server (S).

**4.** Method according to claims 1 or 2, **characterized in that** the response key (Kr) corresponds to the new payload key (Kp').

**5.** Method according to claim 1 or 2, **characterized in that** the response key (Kr) represents a derivation key and the new payload key (Kp') is obtained by combining the derivation key and the payload key (Kp).

**6.** Method according to claim 1, **characterized in that** at least one of the request (REQ) sent from the user unit (PC) to the server (S), the response (RES) sent from the server (S) to the user unit (PC), the payload key (Kp), the response key (Kr) or the derivation key are signed.

**7.** Method according to claim 1, **characterized in that** a warning is raised when the payload key (Kp) is equal to the fallback key (Kfp).

**8.** Method according to claim 7, **characterized in that** countermeasures (CM) are applied if the number of warnings exceeds a predefined limit.

**9.** Method according to claim 1, **characterized in that** an acknowledgement message is sent from the user unit (PC) to the server (S) when the user unit (PC) receives a response from the server (S).

**11.** Method according to claim 1, **characterized in that** the countermeasure CM comprises a step consisting of disabling the transmission of a response from the server (S) to the user unit (PC).

**12.** Method according to claim 1, **characterized in that** the fallback key (Kfp) is deleted or deactivated after a successful comparison between the payload key (Kp) and the expected payload key (Kep), the fallback key Kfp being reactivated by the server after sending the response (RES) to the user unit and storing a new payload key (Kep), the fallback key (Kfp) corresponding to the previous payload key Kp.
